# EUROPEAN PATENT APPLICATION

(11) **EP 4 643 719 A1**
(43) Date of publication of application: **05.11.2025**
(21) Application number: 23911026.5
(22) Date of filing: 21.12.2023
(51) Int. Cl.: A47J 27/04, A47J 36/00, B65D 81/00

(54) **TAGINE POT**

(30) Priority: 28.12.2022 ES 202232175 U
(71) Applicant: Desenreda Alimentacion, SL, 28036 Chamartin (Madrid) (ES)
(72) Inventor: EL JARHDAOUI, Mohammed, 28600 Navalcarnero (MADRID) (ES)
(74) Representative: Torner, Juncosa I Associats, SL
(86) International application number: PCT/ES2023/070770
(87) International publication number: WO 2024/141690

(57) **Abstract**

The present invention provides a tagine comprising a plate made up of a cylindrical body that is open at the upper portion thereof; an upper cup configured to cover the plate; and a central cup. The plate comprises a frustoconical neck emerging from the center of a base of the plate and includes grooves in its mouth. The central cup comprises a frustoconical configuration and includes flanges in its lower base for coupling thereof in the grooves of the plate, a cylindrical appendage which is prolonged from an upper portion of the central cup, and a series of aeration windows arranged along the frustoconical surface of the central cup. The upper cup comprises a frustoconical configuration fitted with respect to dimensions of the central cup and includes a hole in its upper portion, and a series of windows arranged along the frustoconical surface of the upper cup.

## Description

### TECHNICAL FIELD

The present invention relates to a tagine or tajine (tajin in Berber), i.e., a conventional pot-like container/utensil common in Moroccan gastronomy and intended to maintain heat and steam after cooking.

The object of the invention is to provide a stackable, easily and comfortably-handleable utensil that is safe, stable, and provided with means for regulating the ventilation of its contents, ideal for the field of application relating to home delivery and take-away food.

### BACKGROUND OF THE INVENTION

Tagines are utensils typical of Moroccan gastronomy traditionally obtained from mud which are made up of a generally shallow plate having a large diameter and an essentially conical upper lid, intended to maintain heat and steam during and after cooking, which condenses in the upper part of the lid and falls onto the food again, preventing the food from drying out.

This type of food is becoming increasingly popular, to the point where it has a large market even in "home delivery" or "take-away" food.

Obviously, the ceramic nature of utensils of this type is not the most ideal for this type of market for the following reasons:
- Given its structuring and nature, it complicates the transport of the product since it is a fragile utensil with an unstable connection between its parts.
- It is relatively common to sustain minor burns while handling same if no extra care is taken.
- The closure between its parts does not go beyond the semi-stable support of one part on the other, which under normal conditions is more than sufficient, but in the case of having to transport the utensil with food therein is completely insufficient and may cause product losses.
- It takes up a large volume when stored with other utensils of the same type.
- It is not possible to safely stack several food-filled utensils.
- It does not allow suitable ventilation of the food.

Some patent documents which disclose different tagine configurations, such as documents FR2940250-B1, MA42184-B1, and CN201840297-U, are known in the state of the art.

### DESCRIPTION OF THE INVENTION

The proposed tagine solves in a fully satisfactory manner the problems set forth above in each and every one of the mentioned aspects based on a simple but extremely effective solution.

To that end, unlike what is conventional, the device of the invention is made up of three parts, that is, a plate, a central/main cup, and an upper cup, provided with coupling means for coupling to one another.

More particularly, the plate has an essentially cylindrical configuration, is open at the upper portion thereof, and includes a frustoconical neck/body emerging from the center of the base of the plate.

Likewise, the plate includes grooves/guides in correspondence with its mouth that determine/provide a bayonet closure for the central cup.

In turn, the central part has a frustoconical configuration, the upper portion/base of which is prolonged into a short cylindrical appendage or neck, and includes aeration windows, particularly square and vertically elongated windows, distributed along the frustoconical surface. The central part also includes flanges in its lower base for coupling thereof with the grooves/guides of the plate.

The upper cup, also having a frustoconical configuration, is complemented with the central cup. This upper cup comprises a hole having a diameter similar to the cylindrical neck of the central part, and a series of windows complementary to the aeration windows of the central cup. The upper cup is thereby coupled by insertion into the central cup, determining a part that can be rotated with respect to the central cup, such that the windows of both cups are facing one another or shifted with respect to one another, allowing the ventilation inside the utensil to be regulated at the user's discretion.

Moreover, the frustoconical neck included in the base of the plate allows the utensil to be stacked in a completely stable manner with other empty or food-filled utensils of the same type.

In terms of the materials used, although the device of the invention can be manufactured from a very wide range of materials, without it affecting the essence of the invention, since it is preferably intended for the field of home delivery/take-away food, it will preferably be obtained from cost-effective materials such as plastic, without ruling out other materials.

In some embodiments, die-cut elements are also included arranged in one or more parts of the frustoconical surface of the central cup. These die-cut elements, which can be personalized with the name/logotype of the restaurant, for example, allow part of the steam to be released when the tagine is closed (i.e., when the three parts are coupled to one another).

The following advantages are derived based on this structuring:
- It facilitates the transport of the food product in a more efficient, comfortable, and practical manner.
- It provides a safer handling, minimizing the risks of sustaining burns.
- It prevents product losses, as a result of the hermetic closure thereof facilitated by the clockwise quarter-turn coupling guides.
- It allows suitable ventilation of the food given its special design which includes vertical ventilation windows to regulate the temperature inside the utensil and prevent condensation. Likewise, the die-cut elements, which can include the logotype or name of the restaurant in question, for example, allow maintaining the organoleptic and consumption hygienic properties, in addition to ornamental and commercial use.
- It facilitates the handling of the utensil in terms of gripping same as a result of the lower hollow cylinder that ensures a safe and firm grip.
- The design of said cylinder likewise allows element coupling that optimizes the storage of both new and unused utensils, as well as utensils being transported for home delivery, reducing transport space and preventing the utensils from moving as the plates are coupled to one another. This allows the tagines to be stacked in heights of 2 and 3 elements.

### BRIEF DESCRIPTION OF THE DRAWINGS

The foregoing and other features and advantages will be better understood based on the following detailed description of several merely illustrative, non-limiting embodiments in reference to the attached drawings, in which:
Figures 1A and 1B show respective perspective views of a tagine made according to the object of the present invention, in its two intended operating positions based on the degree of ventilation provided for the food contained therein.

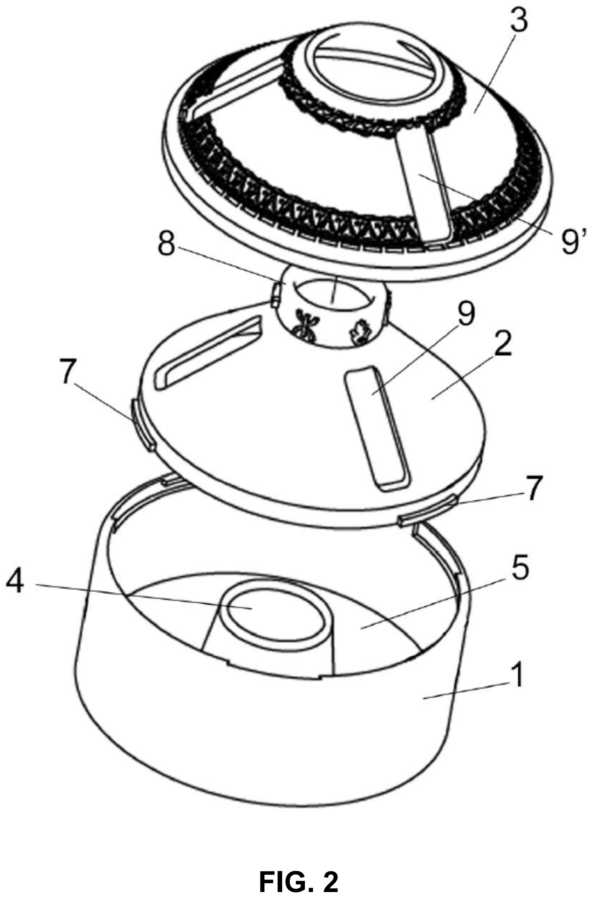

Figure 2 shows an exploded perspective view of the device of the preceding figure.

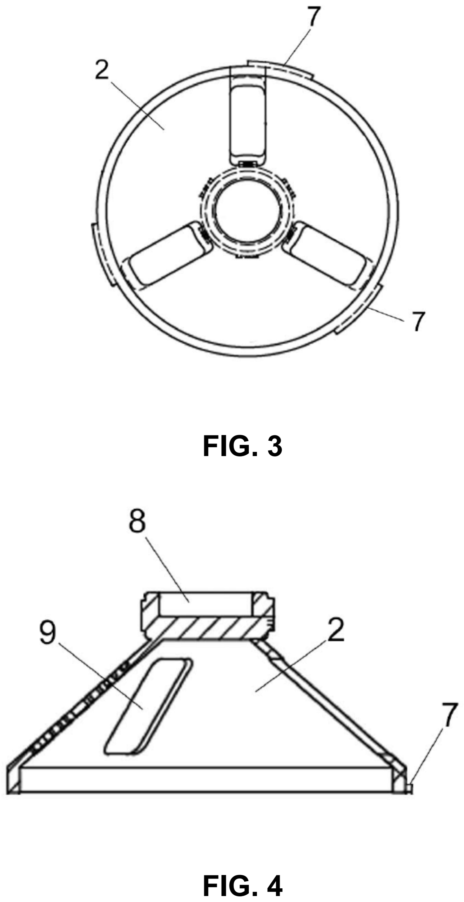

Figure 3 shows a plan view of the cup of the device of the preceding figures.
Figure 4 shows a diametrically sectioned profile view of the cup of Figure 3.
Figure 5 shows a plan view of the plate.
Figure 6 shows a diametrically sectioned profile view of the plate.

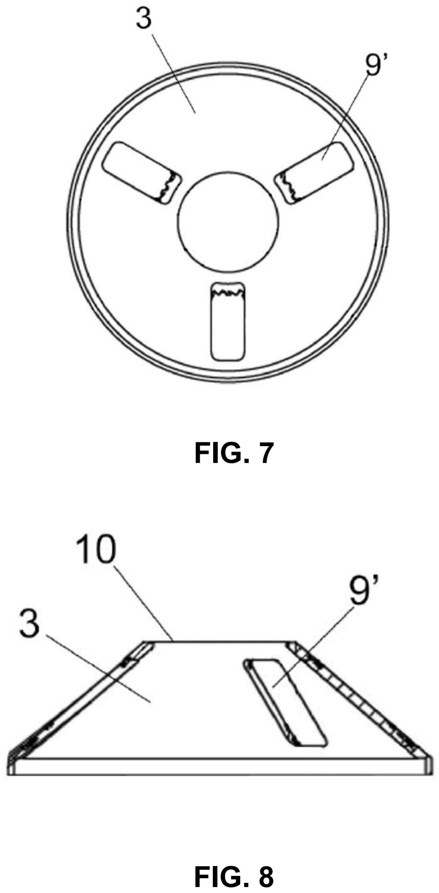

Figure 7 shows a plan view of the upper cup.
Finally, Figure 8 shows a diametrically sectioned profile view of the upper cup.

### DETAILED DESCRIPTION OF THE INVENTION AND EMBODIMENTS

In view of the mentioned figures, it can be seen how the tagine of the invention is made up of three parts; a plate (1), a central cup (2), and an upper cup (3).

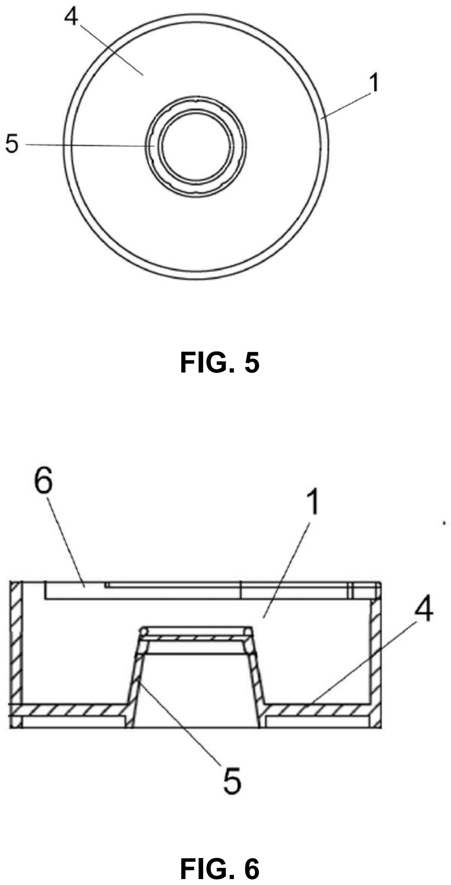

According to Figures 5 and 6, the plate (1) is made up of an essentially cylindrical body that is open at the upper portion thereof, having a frustoconical neck (4) emerging from the center of its base (5). The mentioned frustoconical neck (4) allows stacking means to be established and facilitates the handling of the utensil.

The mouth of the plate (1) includes grooves (6) determining bayonet coupling means for the central cup (2).

In turn, the central cup (2) has a frustoconical configuration, with flanges (7) in its lower base intended to be introduced into the grooves (6) such that by means of rotating this part, a stable coupling is achieved between the plate (1) and the central cup (2) like any conventional bayonet mechanism.

The upper portion of the central cup (2) is prolonged upwards into a particularly closed cylindrical appendage (8) which also serves as stacking means for stacking between containers, as well as determines coupling means for the upper cup (3).

The frustoconical surface of the central cup (2) includes a series of aeration windows (9), preferably having a vertically elongated rectangular configuration, although they may have any other configuration without it affecting the essence of the invention.

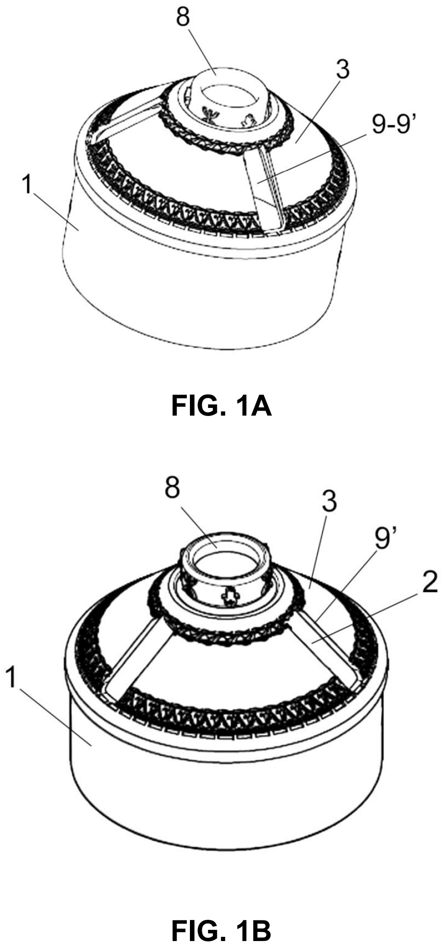

Finally, the upper cup (3) also has a frustoconical configuration, open at both its lower base and its upper base, in accordance with the dimensions of the central cup (2). The upper portion of the upper cup (3) comprises a hole (10) through which the cylindrical appendage (8) of the central cup (2) can be introduced/coupled. Likewise, the upper cup (3) comprises windows (9') complementary to the aeration windows (9) of the central cup (2). In this way, based on the relative position between the central cup (2) and the upper cup (3), as shown in Figures 1A and 1B, the windows (9-9') can be made to coincide with one another, facilitating the aeration of the product contained inside the utensil, or causing them to be shifted with respect to one another, preventing the circulation of air inside the utensil, based on the specific criteria/needs of each case.

In some embodiments, which in this case are not illustrated, the frustoconical surface of the central cup (2) can also include die-cut elements, preferably arranged between the aeration windows (9). These die-cut elements (for example, letter, symbols, or numbers), in addition to a commercial and esthetic function since they can be personalized with a logo or name, allow steam or heat of the food to be partially released when the upper cup (3) is coupled to the other parts, thereby preventing excessive condensation thereof. In other words, when the windows (9') are made to coincide with the die-cut elements, the steam/heat generated in the plate (1) can be released partially.

The scope of the present invention is defined in the attached claims.

## Claims

1. A tagine, comprising:
a plate (1) made up of a cylindrical body that is open at the upper portion thereof;
an upper cup (3) configured to cover the plate;
**characterized in that** it further comprises:
a central cup (2), such that the tagine is made up of three parts that can be connected to one another,
wherein:
the plate (1) comprises a frustoconical neck (4) emerging from the center of a base (5) of the plate (1) and includes grooves (6) in its mouth, providing bayonet coupling means for the central cup (2);
the central cup (2) comprises a frustoconical configuration and includes flanges (7) in its lower base for coupling thereof in the grooves (6) of the plate (1), a cylindrical appendage (8) which is prolonged from an upper portion of the central cup (2), and a series of aeration windows (9) arranged along the frustoconical surface of the central cup (2); and
the upper cup (3) comprises a frustoconical configuration fitted with respect to dimensions of the central cup (2) and includes a hole (10) in its upper portion having a diameter in accordance with dimensions of the cylindrical appendage (8), and a series of windows (9') arranged along the frustoconical surface of the upper cup (3), said series of windows (9') being complementary to the aeration windows (9) of the central cup (2) and susceptible to being made to coincide or be shifted with respect to the aeration windows (9) based on a relative position between the central cup (2) and the upper cup (3).

2. The tagine according to claim 1, wherein it is made of a plastic material.

3. The tagine according to claim 1 or 2, further comprising die-cut elements arranged in one or more parts of the frustoconical surface of the central cup (2).
